# EUROPEAN PATENT SPECIFICATION

(11) **EP 2 436 469 B1**
(45) Date of publication and mention of the grant of the patent: **29.03.2017**
(21) Application number: 11180456.3
(22) Date of filing: 07.09.2011
(51) Int. Cl.: B23D 59/00

(54) **Mitre saw**
Gehrungssäge
Scie à onglets

(30) Priority: 04.10.2010 JP 2010225119; 01.07.2011 JP 2011147568
(43) Date of publication of application: 04.04.2012
(73) Proprietor: Makita Corporation, Anjo, Aichi 446-8502 (JP)
(72) Inventor: Miura, Masahiko, Anjo, Aichi 446-8502 (JP); Suzuki, Satoshi, Anjo, Aichi 446-8502 (JP); Inai, Masahiko, Anjo, Aichi 446-8502 (JP); Tanaka, Koji, Anjo, Aichi 446-8502 (JP); Sasaki, Katsuhiko, Anjo, Aichi 446-8502 (JP)
(74) Representative: Kramer Barske Schmidtchen Patentanwälte PartG mbB

(56) References cited:
- EP-A1- 0 601 805
- EP-A2- 0 958 878
- EP-A2- 2 233 237
- NL-A- 9 300 837
- US-A- 2 372 699

## Description

### BACKGROUND OF THE INVENTION

### TECHNICAL FIELD

The present invention relates to a mitre circular for cutting a workpiece placed on a base by lowering a main body having a circular saw blade.

### BACKGROUND ART

EP 0 958 878 A2 discloses a mitre saw comprising a dust collector.

NL 9 300 837 A discloses a sawing machine comprising a stop member provided with passages which adjoin a chamber in which a vacuum can be generated to suck dust/chips inside the chamber.

EP 2 233 237 A2 discloses a mitre saw as per the preamble of claim 1 comprising a chips guiding structure.

As a known mitre saw, Japanese Laid-open Patent Application Publication No. 2005-169742 discloses a mitre saw with an upper table, in which a mitre saw mode and a table saw mode can be selectively used. In the mitre saw mode, a workpiece placed on a base is cut by lowering a main body using a lower edge portion of a circular saw blade that is provided on the main body and driven to rotate, and in the table saw mode, the main body is fixed at a predetermined lowered position and the upper table is kept in a horizontal posture such that a workpiece place on the upper table is slid and cut using an upper edge portion of the circular saw blade that is protruding from the upper table.

According to the conventional mitre saw with an upper table, a discharge nozzle is provided at a front side of a lower surface of the upper table, and chips generated from a workpiece in the table saw mode are discharged through the discharge nozzle toward the front side of the upper table. If a dust collector is connected to the discharge nozzle through a hose, chips can be sucked and collected by the dust collector.

When the mitre saw is used in the mitre saw mode, chips generated from the workpiece are scattered backward and then collected by a dust-collecting nozzle provided on an arm for supporting the main body. When the circular saw blade passes through a blade edge plate as the cutting operation proceeds, chips are moved along a dust-collecting path provided in the base (turn table), scattered backward and collected by the dust-collecting nozzle. The same can be said to a mitre saw without an upper table.

However, when chips are discharged from the discharge nozzle, the chips are discharged and scattered toward a worker standing in front of the discharge nozzle and the worker may experience a feeling of discomfort. This problem may be solved if a dust collector is connected to the discharge nozzle through a hose. However, the hose may become an obstacle for the worker, which leads to a difficulty in a smooth cutting operation for a workpiece.

On the contrary, in a mitre saw which does not have a mitre saw mode and an upper table, chips may remain on the turn table or in the dust-collecting path, which causes scattering of the chips or clogging of the dust-collecting path.

In view of the above, it is an aspect of the present invention to provide a miter saw, which can prevent scattering of chips and clogging of the dust-collecting path, so that the chips can be efficiently discharged.

### SUMMARY OF THE INVENTION

In order to achieve the above object, there is provided a mitre saw comprising the combination of features of independent claim 1. Preferred embodiments of the invention are disclosed by the dependent claims.

Preferably, in a first specific embodiment, the mitre saw according to the present invention may be characterized in that an upper table is disposed above the main body and configured such that an upper edge of the circular saw blade penetrates the upper table at a predetermined lowered position of the main body. When the upper table is kept in a horizontal posture, the workpiece is slidable along an upper surface of the upper table in front-and-rear directions. In addition, the front end portion of the second dust-collecting path opens at a front side of the first dust-collecting path so that the second dust-collecting path is in communication with the main body at the predetermined lowered position of the main body. Therefore, chips generated by cutting the workpiece on the upper table at the predetermined lowered position of the main body are guided to pass through inside the main body and into the second dust-collecting path and to be discharged outside the base.

According to the present invention, the term "base" includes a turntable which supports the main body and is horizontally rotatably placed on the base. Further, the term "inside the main body" means not only "inside a stationary casing" such as a blade case for shielding an upper part of the circular saw blade but also "inside a movable casing" such as a safety cover which shields a lower part of the circular saw blade and moves to open and close the circular saw blade in accordance with upward and downward movements of the main body.

Preferably, in a second specific embodiment, the mitre saw according to the first specific embodiment may be characterized in that a safety cover is provided on the main body and configured to be rotatably moved by upward and downward movements of the main body between a covering position and an open position. The covering position is a position where the safety cover is positioned at a lower side of the main body to shield the circular saw blade. The open position is a position where the safety cover is positioned at a front side of the main body to expose a lower edge of the circular saw blade. In addition, the safety cover is positioned in the open position when the main body is in the predetermined lowered position, in which position the front end portion of the second dust-collecting path is in communication with an interior of the safety cover whereas the rear end portion of the second dust-collecting path opens at a rear surface of the base. Therefore, chips generated by cutting the workpiece on the upper table are guided to pass through inside the safety cover and into the second dust-collecting path and to be discharged rearwardly of the base.

Preferably, in a third specific embodiment, the mitre saw according to the present invention may be characterized in that the first dust-collecting path and the second dust-collecting path are connected to each other through a connecting path.

Preferably, in a fourth specific embodiment, the mitre saw according to the third specific embodiment may be characterized in that the connecting path connects the first dust-collecting path and the second dust-collecting path at a rear half portion of the second dust-collecting path.

Preferably, in a fifth specific embodiment, the mitre saw according to the third specific embodiment may be characterized in that the connecting path connects the first dust-collecting path and the second dust-collecting path at their lower half portions.

Preferably, in a sixth specific embodiment, the mitre saw according to the present invention may be characterized in that the second dust-collecting path is adjacent to the first dust-collecting path.

Preferably, in a seventh specific embodiment, the mitre saw according to the present invention may be characterized in that a through-opening is formed in a bottom surface of the second dust-collecting path so that part of the second dust-collecting path opens outside.

Preferably, in an eighth specific embodiment, the mitre saw according to the seventh specific embodiment may be characterized in that the through-opening is formed as an oblong hole extending along a direction in which the second dust-collecting path is formed.

With the configuration of the mitre saw according to the present invention, scattering of chips and clogging of the first dust-collecting path can be prevented by providing the second dust-collecting path, so that the chips can be efficiently discharged.

With the configuration of the mitre saw according to the first specific embodiment, in addition to the above advantageous effects of the mitre saw according to the present invention, since the mitre saw with the upper table is configured such that chips generated by cutting the workpiece on the upper table at the predetermined lowered position of the main body are guided to pass through inside the main body and into the second dust-collecting path and to be discharged outside the base at a position lower than the upper surface of the base. Therefore, the chips can be efficiently discharged in the table saw mode without the worker experiencing discomfort or without deteriorating workability due to disturbed chips.

With the configuration of the mitre saw according to the second specific embodiment, in addition to the above advantageous effects of the mitre saw according to the first specific embodiment, the chips can be efficiently guided into the second dust-collecting path by use of the safety cover.

With the configuration of the mitre saw according to the third specific embodiment, in addition to the above advantageous effects of the mitre saw according to the present invention, the airflow generated in the first dust-collecting path by the rotation of the circular saw blade can be used to increase a flow velocity within the second dust-collecting path. Therefore, the chips can be smoothly and reliably guided to pass through inside the second dust-collecting path.

With the configuration of the mitre saw according to the fourth specific embodiment, in addition to the above advantageous effects of the mitre saw according to the third specific embodiment, the airflow from the first dust-collecting path can be efficiently used at the rear half portion of the second dust-collecting path where the flow velocity becomes smaller.

With the configuration of the mitre saw according to the fifth specific embodiment, in addition to the above advantageous effects of the mitre saw according to the third specific embodiment, the flow velocity can be increased in the connecting path and the second dust-collecting path by reducing the sectional area of the connecting path.

With the configuration of the mitre saw according to the sixth specific embodiment, in addition to the above advantageous effects of the mitre saw according to the present invention, the airflow generated by the rotation of the circular saw blade can be smoothly guided into the second dust-collecting path without encountering high resistance.

With the configuration of the mitre saw according to the seventh specific embodiment, in addition to the above advantageous effects of the mitre saw according to the present invention, since part of the chips passing through the second dust-collecting path or chips remaining in the second dust-collecting path upon completing the cutting operation can be discharged outside from the through-opening. Accordingly, clogging of the second dust-collecting path can be favorably prevented by reducing the chips remaining in the second dust-collecting path. Further, even if chips remain within the second dust-collecting path, the chips can be readily scraped out through the through-opening.

With the configuration of the mitre saw according to the eighth specific embodiment, in addition to the above advantageous effects of the mitre saw according to the seventh specific embodiment, since the through-opening is formed as an oblong hole extending along a direction in which the second dust-collecting path is formed. As a result, chips having a specific shape can also be readily discharged through the oblong hole so as to prevent the chips from remaining in the second dust-collecting path.

### BRIEF DESCRIPTION OF THE DRAWINGS

To better understand the claimed invention, and to show how the same may be carried into effect, reference will now be made, by way of example only, to the accompanying drawings.
FIG. 1 is a perspective view of a mitre saw with an upper table (shown in a miter saw mode).
FIG. 2 is a perspective view of the mitre saw (shown in a table saw mode).
FIG. 3 is a side view, partly shown in section, of the mitre saw in the table saw mode.
FIG. 4 is a top view of a turntable, partly shown in section.
FIG. 5 is a top view of a modified turntable, partly shown in section.
FIG. 6 is similar to FIG. 3, but the mitre saw includes an oblong hole in a second dust-collecting path.
FIG. 7 is similar to FIG. 4, but the turntable includes an oblong hole in the second dust-collecting path.
FIG. 8 is similar to FIG. 5, but the turntable includes an oblong hole in the second dust-collecting path.

### DETAILED DESCRIPTION OF THE EXEMPLARY EMBODIMENT

With reference to the accompanying drawings, preferred embodiments of the present invention will be described in detail.

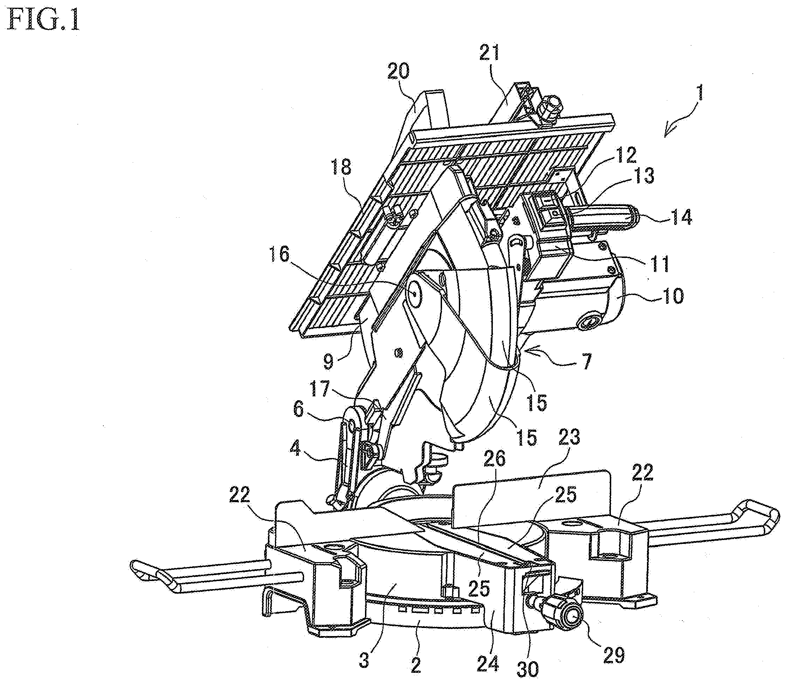

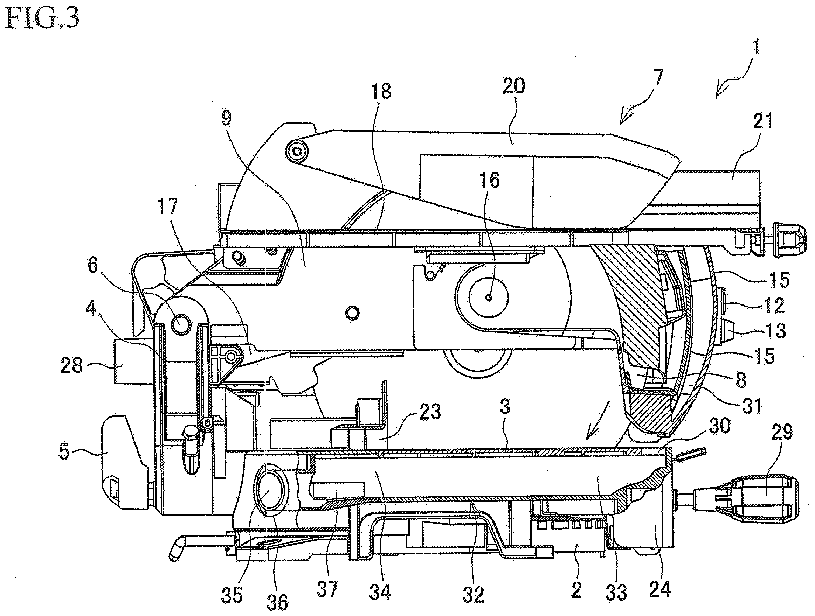

FIGS. 1 to 3 show a mitre saw with an upper table as an example of a mitre saw. The mitre saw 1 includes a base 2, a turntable 3 having a circular configuration as viewed from top and horizontally rotatably supported at a center part of the base 2, an arm 4 provided at the rear end (*i.e.,* left-hand side of FIG. 3) of the turntable 3 and configured to be tiltable in right-and-left directions and fixed at an arbitrary angle by a lever 5, a support shaft 6 provided at an upper end of the arm 4, and a main body 7 supported on the support shaft 6 so as to be movable upward and downward with respect to the base 2. The main body 7 has a circular-shaped saw blade 8 that is driven to rotate by a motor 10. The main body 7 is urged by a spring (not shown) toward the upper dead center position shown in FIG. 1. A blade case 9 for shielding an upper part of the circular saw blade 8 is provided on the main body 7, and the motor 10 is laterally connected to the right side surface of the blade case 9. A console 11 is arranged in front of the motor 10. The console 11 has a start switch 12 and a stop switch 13, and a handle 14 extends laterally from the console 11.

The blade case 9 includes two safety covers 15 configured to shield a lower part of the circular saw blade 8 and each having a sector shape as viewed from side. These safety covers 15 are rotatably supported around a support pin 16. As seen in FIG. 1, when the main body 7 is kept in the upper dead center position, these safety covers 15 are placed in a cover position, at which the two safety covers 15 are arranged in the circumferential direction for shielding the circular saw blade 8. When the main body 7 is lowered, the link 17 suspended from the front surface of the arm 4 causes the safety covers 15 to rotate into an open position, at which the two safety covers 15 are overlapped one on another at the front side of the blade case 9 and the lower edge portion of the circular saw blade 8 is exposed to view.

An upper table 18 is provided on the blade case 9. The upper table 18 has a rectangular shape as viewed from top and is kept in a horizontal posture when the main body 7 is lowered into a predetermined lowered position. The upper table 18 has a slit 19 through which the upper edge portion of the circular saw blade 8 protrudes from the upper table 18. Further, the upper table 18 is equipped with an upper cover 20 for normally shielding the upper edge portion of the circular saw blade 18 and a parallel ruler 21 for guiding a workpiece parallel to the circular saw blade 8.

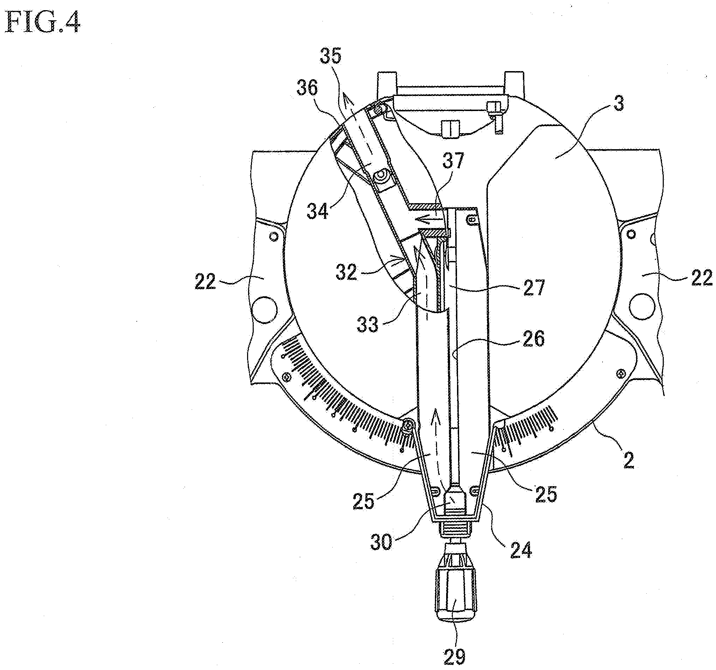

The base 2 has placement portions 22 at right and left sides of the turntable 3, and a guide fence 23 is provided laterally (*i.e.,* in the right-and-left direction) to cross over the turntable 3 between the placement portions 22. An extension portion 24 is provided at a front center portion of the turntable 3. The extension portion 24 extends in the diametrical direction of the turntable 3, and a pair of right and left blade edge plates 25 are provided on the extension portion 24 and the upper surface of the turntable 3. A slit 26 is formed between the blade edge plates 25 in the diametrical direction of the turntable 3, and the circular saw blade 8 enters the slit 26 when the main body 7 is lowered. As best seen in FIG. 4, a first dust-collecting path 27 is formed in the front-and-rear direction just below the slit 26 and within the turntable 3. The first dust-collecting path 27 has a depth which varies in conformity with the shape of the circular saw blade 8 so that the cross-section of the first dust-collecting path 27 defines a circular arc and a center portion thereof becomes the deepest. The first dust-collecting path 27 terminates at an upper rear surface of the turntable 3. The reference numeral 28 indicates a dust-collecting nozzle provided on the arm 4 at the rear of the first dust-collecting path 27. The reference numeral 29 indicates a grip provided on the front end of the extension portion 24 and for performing a rotary operation of the turntable 3.

A wide inlet 30 for chips is formed at the front end of the slit 26 on the turntable 3. As best seen in FIG. 3, when the main body 7 is fixed in the predetermined lowered position by a locking mechanism (not shown), the inlet 30 faces a lower end portion of an outer circumferential path 31 which is formed along the outer side of the circular saw blade 8. The outer circumferential path 31 is disposed at the inside of the outer peripheral portions of the two safety covers 15 positioned between the turntable 3 and the upper table 18 and overlapped one on another. Therefore, the slit 19 of the upper table 18 and the inlet 30 for chips are in communication with each other through the outer circumferential path 31.

A second dust-collecting path 32 is formed within the turntable 3. The second dust-collecting path 32 has a dogleg shape as viewed from top and includes a front half path 33 and a rear half path 34. The front half path 33 is adjacent to and arranged at the left-hand side of the first dust-collecting path 27, and has a front end portion which is in communication with the inlet 30. The rear half path 34 extends leftward from a rear end portion of the front half path 33. A tubular-shaped outlet 35 formed at the rear end of the rear half path 34 opens into a through-opening 36 formed in the rear surface of the turntable 3. Further, a connecting path 37 extending in the right-and-left direction connects the terminal end of the first dust-collecting path 27 and the rear half path 34 of the second dust-collecting path 32. The connecting path 37 has a rectangular cross-section and the height thereof is substantially half the vertical height of the first dust-collecting path 27 and the second dust-collecting path 32. The connecting path 37 connects the first dust-collecting path 27 and the second dust-collecting path 32 at their lower half portions.

In the mitre saw with the upper table configured as described above, when the worker uses the mitre saw 1 in the mitre saw mode, the worker places a workpiece on the turntable 3 and performs positioning by pressing the workpiece against the guide fence 23 while the main body 7 is in the upper dead center position as shown in FIG. 1. The worker then turns on the start switch 12, so that the motor 10 is driven and the circular saw blade 8 is driven to rotate. When the worker lowers the main body 7, the workpiece can be cut by the circular saw blade 8. During the cutting operation, when the worker tilts the arm 4 with respect to the vertical direction which is perpendicular to the upper surface of the turntable 3, a bevel cutting is available, in which the circular saw blade 8 is tilted with respect to the turntable 3. On the contrary, when the worker turns the turntable 3 in the horizontal direction, a mitered cut is available, in which the circular saw blade 8 is tilted with respect to the guide fence 23.

Chips generated by cutting the workpiece are scattered backward along the tangential direction of the circular saw blade 8, collected by the dust-collecting nozzle 28 provided on the arm 4, and stored in a dust-collecting bag or a dust collector connected to the dust-collecting nozzle 28. As the cutting operation of the workpiece proceeds, chips are guided to pass through the first dust-collecting path 27 and scattered upward from the rear side of the turntable 3 and then arrested by the dust-collecting nozzle 28. In this instance, since the connecting path 37 opens substantially orthogonal to the scattering direction of the chips, the chips passing through the first dust-collecting path 27 hardly enters the connecting path 37. When chips scattered over the blade edge plates 25 enter the inlet 30 for chips, the chips are guided backward in the second dust-collecting path 32 and discharged outside the turntable 3 from the outlet 35 as described later.

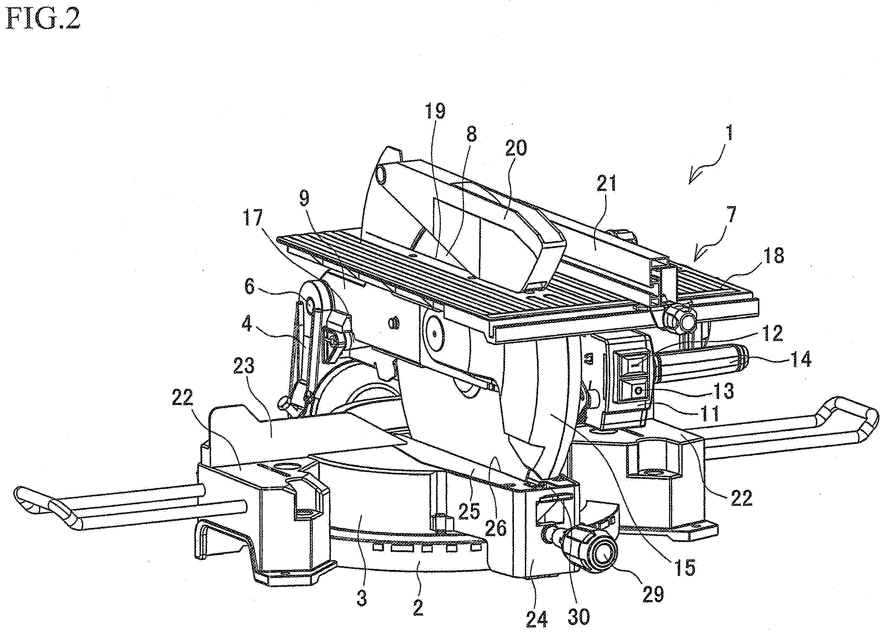

Next, when the worker uses the mitre saw 1 in the table saw mode, the main body 7 is lowered into the predetermined position and locked, so that the upper table 18 is kept in the horizontal posture as shown in FIGS. 2 and 3. The worker then turns on the start switch 12 and the circular saw blade 8 rotates in the direction shown by the arrow of FIG. 3. While the circular saw blade 8 is rotating, the worker slides the workpiece on the upper table 18 along the parallel ruler 21 from the front side of the upper table 18 toward the circular saw blade 8, so that the workpiece is cut by the circular saw blade 8 protruding from the upper surface of the upper table 18 through the slit 19.

Chips generated by cutting the workpiece are scattered downward from the slit 19 along the tangential direction of the circular saw blade 8, passing through the outer circumferential path 31 formed by the two safety covers 15, and enter the second dust-collecting path 32 through the inlet 30. As shown by the dotted arrow in FIG. 4, the chips flowing into the second dust-collecting path 32 are moved backward within the second dust-collecting path 32 and discharged outside the turntable 3 from the outlet 35. Therefore, if a dust-collecting bag or a dust collector is connected to the outlet 35, the chips can be collected without being scattered frontward of the upper table 18.

Particularly in this embodiment, since the rear half path 34 of the second dust-collecting path 32 is connected to the first dust-collecting path 27 by the connecting path 37, an airflow generated in the first dust-collecting path 27 by the rotation of the circular saw blade 8 passes through the connecting path 37 as shown by the solid arrow and flows into the rear half path 34. Therefore, the airflow in the second dust-collecting path 32 increases and the chips can be smoothly and reliably guided to pass through inside the second dust-collecting path 32.

As described above, according to the mitre saw 1 in this embodiment, the second dust-collecting path 32 is formed in the turntable 3 of the base 2 such that the front end portion of the second dust-collecting path 32 opens above the turntable 3 and the rear end portion of the second dust-collecting path 32 opens outside at a position lower than the upper surface of the turntable 3, whereby part of the chips can be discharged outside the turntable 3 through the second dust-collecting path 32. Therefore, scattering of chips and clogging of the first dust-collecting path 27 can be prevented, and the chips can be efficiently discharged.

Particularly in this embodiment, the front end portion of the second dust-collecting path 32 opens at the front side of the first dust-collecting path 27 so that the second dust-collecting path 32 is in communication with the main body 7 at the predetermined lowered position of the main body 7. In this configuration, chips generated by cutting the workpiece on the upper table 18 at the predetermined lowered position of the main body 7 are guided to pass through inside the main body 7 and into the second dust-collecting path 32 and to be discharged outside the turntable 3. Therefore, the chips can be efficiently discharged in the table saw mode without the worker experiencing discomfort or without deteriorating workability due to disturbed chips.

Further, the safety covers 15 are positioned in the open position when the main body 7 is in the predetermined lowered position, in which position the front end portion of the second dust-collecting path 32 is in communication with the interior of the safety covers 15 whereas the rear end portion of the second dust-collecting path 32 opens at the rear surface of the turntable 3. Consequently, chips generated by cutting the workpiece in the table saw mode are guided to pass through inside the safety covers 15 and into the second dust-collecting path 32 and to be discharged rearwardly of the turntable 3. Therefore, the chips can be efficiently guided into the second dust-collecting path 32 by use of the safety covers 15.

Further, since the first dust-collecting path 27 and the second dust-collecting path 32 are connected to each other through the connecting path 37, the airflow generated in the first dust-collecting path 27 by the rotation of the circular saw blade 8 can be used to increase a flow velocity within the second dust-collecting path 32. Therefore, the chips can be smoothly and reliably guided to pass through inside the second dust-collecting path 32.

Particularly in this embodiment, since the connecting path 37 connects the first dust-collecting path 27 and the second dust-collecting path 32 at the rear half path 34 of the second dust-collecting path 32, the airflow from the first dust-collecting path 27 can be efficiently used at the rear half path 34 of the second dust-collecting path 32 where the flow velocity becomes smaller.

Furthermore, since the second dust-collecting path 32 is adjacent to the first dust-collecting path 27, the airflow generated by the rotation of the circular saw blade 8 can be smoothly guided into the second dust-collecting path 32 without encountering high resistance.

Although the present invention has been described in detail with reference to the above preferred embodiment, the present invention is not limited to the above specific embodiment and various changes and modifications may be made without departing from the scope of the appended claims.

In the above embodiment, the connecting path connects the first dust-collecting path and the second dust-collecting path at the rear half path of the second dust-collecting path. However, the present invention is not limited to this specific embodiment, and the connecting path may connect the first dust-collecting path and the second dust-collecting path at the front half path. Alternatively, the first dust-collecting path and the second dust-collecting path are connected at a plurality of connecting points including the front half path and the rear half path.

Further, the second dust-collecting path may have a linear shape or a curved shape instead of the dogleg shape. Of course, the second dust-collecting path may be arranged reversely at the right-hand side of the first dust-collecting path.

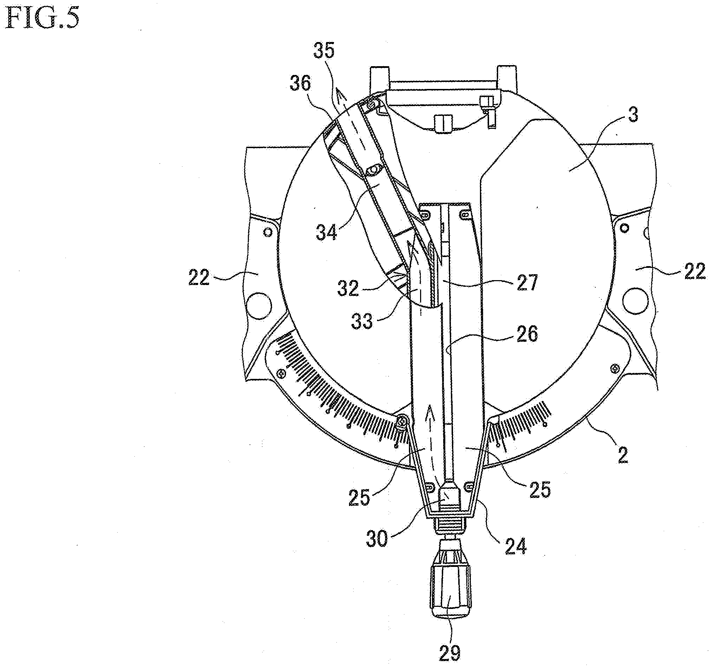

Meanwhile, as best seen in FIG. 5, the first dust-collecting path 27 and the second dust-collecting path 32 may be formed separately and independently without providing a connecting path. In this configuration, each airflow of the first dust-collecting path 27 and the second dust-collecting path 32 may not be disturbed by other airflows which are caused by the high flow velocity within the second dust-collecting path due to high rotation speed of the circular saw blade.

Particularly in this configuration, there may be provided a fan in the second dust-collecting path such that the rotation of the fan is controlled in synchronization with table saw mode. Even if the connecting path is not provided, providing the fan makes it possible to increase the flow rate or the flow velocity of air flowing in the second dust-collecting path, which leads to increased dust-collecting efficiency.

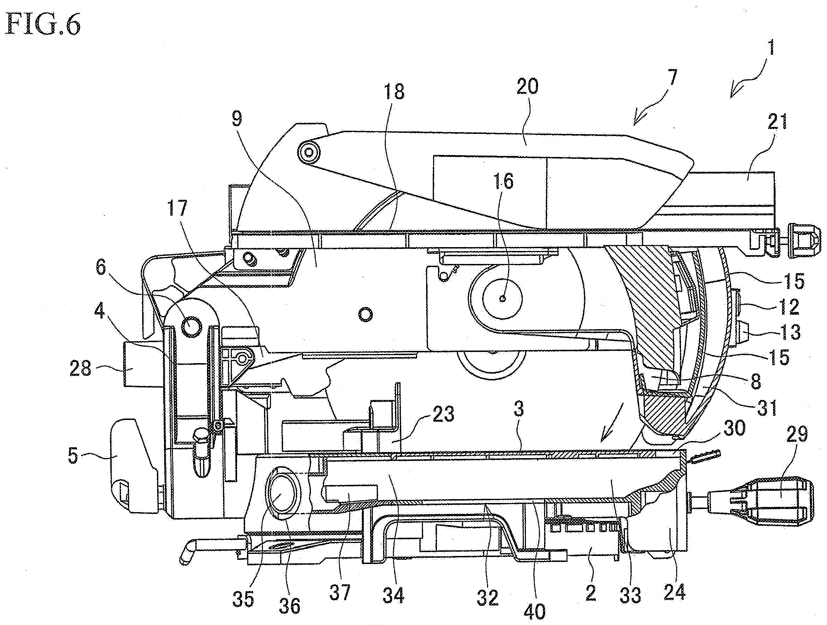

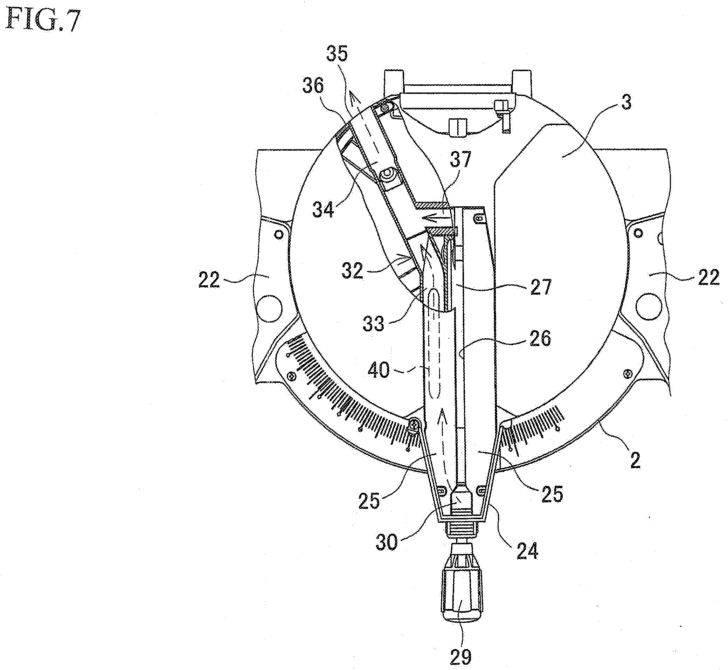

As best seen in FIGS. 6 and 7, an oblong hole 40 extending along a direction in which the second dust-collecting path 32 is formed *(i.e.,* along the front-and-rear direction) may be formed in the bottom surface of the second dust-collecting path 32 substantially at the longitudinal center region of the second dust-collecting path 32 so that part of the second dust-collecting path 32 opens outside. When a dust collector is not connected to the outlet 35, chips may remain within the second dust-collecting path 32 and increasing the remaining chips may cause clogging of the second dust-collecting path 32. In this instance, the blade edge plates 25 have to be removed for cleaning the second dust-collecting path 32, and therefore a time-consuming maintenance operation is required.

Providing the oblong hole 40 makes it possible to cause part of the chips passing through the second dust-collecting path 32 or chips remaining in the second dust-collecting path 32 upon completing the cutting operation to be discharged outside from the oblong hole 40. Therefore, clogging of the second dust-collecting path 32 can be favorably prevented by reducing the chips remaining in the second dust-collecting path 32. Further, even if chips remain within the second dust-collecting path 32, the chips can be readily scraped out through the oblong hole 40.

Although chips are discharged outside the second dust-collecting path 32 through the oblong hole 40, the chips merely fall within the base 2 and scattering of the chips outside the base 2 can be prevented. Therefore, the chips falling from the oblong hole 40 do not affect the cutting operation.

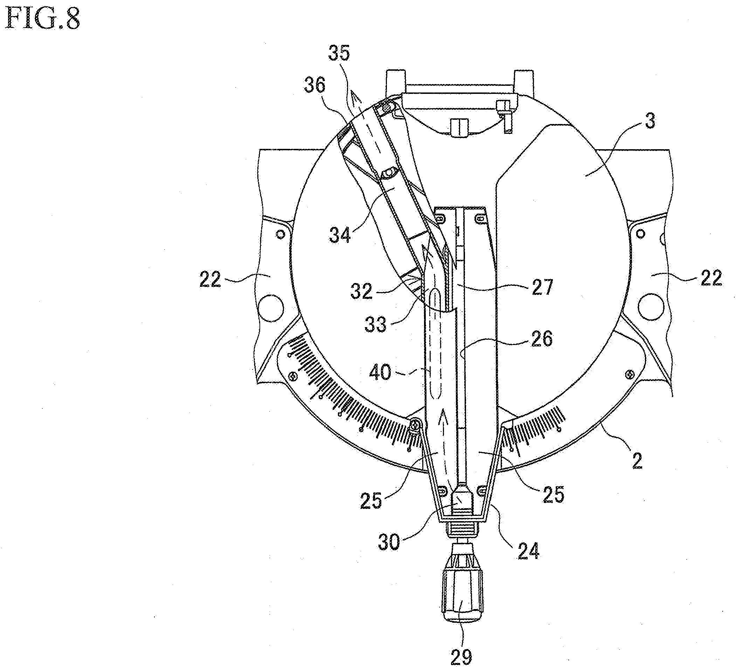

As best seen in FIG. 8, the oblong hole 40 is applicable even if the connecting path is omitted. Further, the shape of the oblong hole 40 may be modified and one or more of the through-holes, for example, in the shape of a circle or a square may be formed instead. However, an oblong hole extending along a direction in which the second dust-collecting path is formed is advantageous because remaining of chips having a special shape can be prevented and the chips can be readily scraped out through the oblong hole.

In the above embodiment, chips generated by cutting a workpiece in the table saw mode are guided to pass through inside the safety covers and into the second dust-collecting path. However, chips may be guided to pass through inside other casings such as the blade case, where necessary, in accordance with the configuration of the main body.

Other than the above, the configuration of the mitre saw with the upper table is not limited to the above specific embodiment.

On the contrary, the present invention is not limited to a mitre saw with an upper table. The present invention is applicable to a mitre saw without an upper table. When both the first and second dust-collecting paths are formed, in this configuration, chips can be dispersed and discharged through the first dust-collecting path and the second dust-collecting path. Therefore, remaining of chips and clogging of the first dust-collecting path and the second dust-collecting path can be prevented, and the chips can be reliably discharged outside the base.

## Claims

1. A mitre saw (1) comprising
a base (2) on which a workpiece can be placed,
a turntable (3) having a circular configuration as viewed from top and horizontally rotatably supported at a center part of the base (2),
a main body (7) disposed above the base (2) and configured to be movable upward and downward with respect to the base (2),
a circular saw blade (8) provided on the main body (7) and configured to be driven to rotate,
a slit (26) formed in an upper surface of the turntable (3) so as to allow the circular saw blade (8) to enter the slit (26) when the main body (7) is lowered, wherein an opening (30) is formed at a front end of the slit (26) on the turntable (3),
a first dust-collecting path (27) that is formed in a front-rear-direction just below the slit (26) and within the turntable (3) and terminates at an upper rear surface of the turntable (3) and is configured such that the circular saw blade (8) is permitted to enter the first dust-collecting path (27) when the main body (7) is lowered and is configured such that chips can pass through the first dust-collecting path (27) and can be guided rearwardly of the base (2) by the rotation of the circular saw blade (8), **characterised in that** the mitre saw further comprises
a second dust-collecting path (32) that is formed within the turntable (3) such that a front end portion of the second dust-collecting path (32) communicates with the opening (30) and a rear end portion of the second dust-collecting path (32) opens to the outside through a through-opening (36) formed in the rear surface of the turntable (3), and is configured such that chips entering the second dust-collecting path (32) through the opening (30) can be discharged to the outside of the base (2) through the second dust-collecting path (32),
wherein the second dust-collecting path (32) is arranged at the side of the first dust-collecting path (27) in the front-rear-direction, and
wherein the first dust-collecting path (27) and the second dust-collecting path (32) are formed separately and independently with or without providing a connecting path (37) connecting the first dust-collecting path (27) and the second dust-collecting path (32) to each other.

2. The mitre saw according to claim 1, wherein an upper table (18) is disposed above the main body (7) and configured such that an upper edge of the circular saw blade (8) penetrates the upper table (18) at a predetermined lowered position of the main body (7) in which the upper table (18) is kept in a horizontal posture and the workpiece is slidable along an upper surface of the upper table (18) in front-and-rear directions, and wherein the front end portion of the second dust-collecting path (32) opens at a front side of the first dust-collecting path (27) so that the second dust-collecting path (32) is in communication with the main body (7) at the predetermined lowered position of the main body (7), whereby chips generated by cutting the workpiece on the upper table (18) at the predetermined lowered position of the main body (7) are guided to pass through inside the main body (7) and into the second dust-collecting path (32) and to be discharged outside the base (2).

3. The mitre saw according to claim 2, wherein a safety cover (15) is provided on the main body (7) and configured to be rotatably moved by upward and downward movements of the main body (7), between a covering position at which the safety cover (15) is positioned at a lower side of the main body (7) to shield the circular saw blade (8) and an open position at which the safety cover (15) is positioned at a front side of the main body (7) to expose a lower edge of the circular saw blade (8), and the safety cover (15) is positioned in the open position when the main body (7) is in the predetermined lowered position, in which position the front end portion of the second dust-collecting path (32) is in communication with an interior of the safety cover (15) whereas the rear end portion of the second dust-collecting path (32) opens at a rear surface of the turntable (3), whereby chips generated by cutting the workpiece on the upper table (18) are guided to pass through inside the safety cover (15) and into the second dust-collecting path (32) and to be discharged rearwardly of the turntable (3).

4. The mitre saw according to any one of claims 1 to 3, wherein the first dust-collecting path (27) and the second dust-collecting path (32) are connected to each other through a connecting path (37).

5. The mitre saw according to any one of claims 1 to 4, wherein the connecting path (37) connects the first dust-collecting path (27) and the second dust-collecting path (32) at a rear half portion of the second dust-collecting path (32).

6. The mitre saw according to any one of claims 1 to 4, wherein the connecting path (37) connects the first dust-collecting path (27) and the second dust-collecting path (32) at their lower half portions.

7. The mitre saw according to any one of claims 1 to 6, wherein the second dust-collecting path (32) is adjacent to the first dust-collecting path (27).

8. The mitre saw according to any one of claims 1 to 7, wherein a through-opening (40) is formed in a bottom surface of the second dust-collecting path (32) so that part of the second dust-collecting path (32) opens outside.

9. The mitre saw according to claim 8, wherein the through-opening (40) is formed as an oblong hole (40) extending along a direction in which the second dust-collecting path (32) is formed.

10. The mitre saw according to any one of claims 1 to 9, wherein the first dust-collecting path (27) has a depth which varies in conformity with a shape of the circular saw blade (8) so that a cross-section of the first dust-collecting path (27) defines a circular arc and a center portion thereof becomes the deepest.

11. The mitre saw according to any one of claims 1 to 10, wherein the main body (7) is supported on a supporting shaft (6) at an upper end of an arm (4) provided at the rear end of the turntable (3) so as to be movable upward and downward with respect to the base (2), and wherein the arm (4) is provided with a dust-collecting nozzle (28) which is arranged at a rear of the first dust-collecting path (27).

## Patentansprüche

1. Gehrungssäge (1) mit
einer Basis (2), auf welcher ein Werkstück platziert werden kann,
einem Drehtisch (3), der eine kreisförmige Konfiguration aufweist, wenn von oben gesehen, und an einem mittleren Teil der Basis (2) horizontal drehbar gelagert ist,
einem Hauptkörper (7), der oberhalb der Basis (2) angeordnet ist und dazu konfiguriert ist, dass er nach oben und nach unten in Bezug auf die Basis (2) bewegbar ist,
einem kreisförmigen Sägeblatt (8), das an dem Hauptkörper (7) vorgesehen ist und dazu konfiguriert ist, dass es zum Drehen angetrieben wird,
einem Schlitz (26), der auf einer oberen Oberfläche an dem Drehtisch (3) so ausgebildet ist, so dass es dem kreisförmigen Sägeblatt (8) erlaubt ist, in den Schlitz (26) einzutreten, wenn der Hauptkörper (7) gesenkt wird, wobei eine Öffnung (30) an einem vorderen Ende des Schlitzes (26) an dem Drehtisch (3) ausgebildet ist,
einem ersten Staubsammelweg (27), der in einer Vorder-Rück-Richtung genau unterhalb des Schlitzes (26) und innerhalb des Drehtisches (3) ausgebildet ist und an einer oberen hinteren Oberfläche des Drehtisches (3) endet und dazu konfiguriert ist, dass es dem kreisförmigen Sägeblatt (8) erlaubt ist, in den ersten Staubsammelweg (27) einzutreten, wenn der Hauptkörper (7) gesenkt wird, und dazu konfiguriert ist, dass Sägespäne durch den ersten Staubsammelweg (27) passieren können und rückwärtig der Basis (2) geführt werden durch die Drehung des kreisförmigen Sägeblattes (8),
**dadurch gekennzeichnet, dass** die Gehrungssäge weiter einen zweiten Staubsammelweg (32) aufweist, der innerhalb des Drehtisches (3) so ausgebildet ist, dass ein vorderer Endteil des zweiten Staubsammelweges (32) in Verbindung mit der Öffnung (30) steht, und ein hinterer Endteil des zweiten Staubsammelweges (32) zu der Außenseite durch eine Durchgangsöffnung (36) sich öffnet, die in der hinteren Oberfläche des Drehtisches (3) ausgebildet ist, und dazu konfiguriert ist, dass Sägespäne, die in den zweiten Staubsammelweg (32) eindringen durch die Öffnung (30) zu der Außenseite der Basis (2) durch den zweiten Staubsammelweg (32) abgeleitet werden können,
bei der der zweite Staubsammelweg (32) an der Seite des ersten Staubsammelweges (27) in der Vorder-Rück-Richtung angeordnet ist, und
bei der der erste Staubsammelweg (27) und der zweite Staubsammelweg (30) getrennt und unabhängig mit oder ohne Vorsehen eines Verbindungsweges (37), der den ersten Staubsammelweg (27) und den zweiten Staubsammelweg (32) miteinander verbindet, ausgebildet sind.

2. Gehrungssäge nach Anspruch 1, bei der ein oberer Tisch (18) oberhalb des Hauptkörpers (7) angeordnet ist und dazu konfiguriert ist, dass eine obere Kante des kreisförmigen Sägeblattes (8) den oberen Tisch (18) in einer vorbestimmten abgesenkten Position des Hauptkörpers (7) durchdringt, in welcher der obere Tisch (18) in einer horizontalen Stellung gehalten ist und das Werkstück entlang einer oberen Oberfläche des oberen Tisches (18) in der Vorder-Rück-Richtung gleitbar ist, und bei der der vordere Endteil des zweiten Staubsammelweges (32) an einer vorderen Seite des ersten Staubsammelweges (27) sich öffnet, so dass der zweite Staubsammelweg (32) in Verbindung mit dem Hauptkörper (7) an der vorbestimmten abgesenkten Position des Hauptkörpers (7) steht, wodurch Sägespäne, die durch Schneiden des Werkstückes auf dem oberen Tisch (18) in der vorbestimmten abgesenkten Position des Hauptkörpers (7) erzeugt werden, so geführt werden, dass sie durch das Innere des Hauptkörpers (7) und in den zweiten Staubsammelweg (32) passieren und zu der Außenseite der Basis (2) abgeleitet werden.

3. Gehrungssäge nach Anspruch 2, bei der eine Sicherheitsabdeckung (15) an dem Hauptkörper (7) vorgesehen ist und dazu konfiguriert ist, dass sie durch Bewegungen des Hauptkörpers (7) nach oben und nach unten zwischen einer Abdeckungsposition, in welcher die Sicherheitsabdeckung (15) an einer unteren Seite des Hauptkörpers (7) zum Abschirmen des kreisförmigen Sägeblattes (8) positioniert ist, und einer oberen Position drehbar bewegt wird, in welcher die Sicherheitsabdeckung (15) an einer vorderen Seite des Hauptkörpers (7) zum Freilegen einer unteren Kante des kreisförmigen Sägeblattes (8) positioniert ist, und die Sicherheitsabdeckung (15) in der offenen Position positioniert ist, wenn der Hauptkörper (7) in der vorbestimmten abgesenkten Position ist, in welcher Position der vordere Endteil des zweiten Staubsammelweges (32) in Verbindung mit einem Inneren der Sicherheitsabdeckung (15) ist, bei der der hintere Teil des zweiten Staubsammelweges (32) sich an einer hinteren Oberfläche des Drehtisches (3) öffnet, wodurch Sägespäne, die durch Schneiden des Werkstückes auf dem oberen Tisch (18) erzeugt werden, durch das Innere der Sicherheitsabdeckung (15) und in den zweiten Staubsammelweg (35) passieren und rückwärtig des Drehtisches (3) abgeleitet werden.

4. Gehrungssäge nach einem der Ansprüche 1 bis 3, bei der der erste Staubsammelweg (27) und der zweite Staubsammelweg (32) miteinander durch einen Verbindungsweg (37) verbunden sind.

5. Gehrungssäge nach einem der Ansprüche 1 bis 4, bei der der Verbindungsweg (37) den ersten Staubsammelweg (27) und den zweiten Staubsammelweg (32) an einem hinteren Teil des Staubsammelweges (32) miteinander verbindet.

6. Gehrungssäge nach einem der Ansprüche 1 bis 4, bei der der Verbindungsweg (37) den ersten Staubsammelweg (27) und den zweiten Staubsammelweg (32) an deren unteren Hälften verbindet.

7. Gehrungssäge nach einem der Ansprüche 1 bis 6, bei der der zweite Staubsammelweg (32) angrenzend an den ersten Staubsammelweg (27) ist.

8. Gehrungssäge nach einem der Ansprüche 1 bis 7, bei der eine Durchgangsöffnung (40) in einer Bodenoberfläche des zweiten Staubsammelweges (32) ausgebildet ist, so dass sich Teil des zweiten Staubsammelweges (32) zur Außenseite öffnet.

9. Gehrungssäge nach Anspruch 8, bei der die Durchgangsöffnung (40) als ein längliches Loch (40) ausgebildet ist, das sich in einer Richtung erstreckt, in welcher der zweite Staubsammelweg (32) ausgebildet ist.

10. Gehrungssäge nach einem der Ansprüche 1 bis 9, bei der der erste Staubsammelweg (27) eine Tiefe aufweist, die gemäß einer Form des kreisförmigen Sägeblattes (8) variiert, so dass ein Querschnitt des ersten Staubsammelweges (27) einen kreisförmigen Bogen definiert und ein Mittelteil davon am tiefsten ist.

11. Gehrungssäge nach einem der Ansprüche 1 bis 10, bei der der Hauptkörper (7) an einer Lagerungswelle (6) an einem oberen Ende eines Armes (4) gelagert ist, der an einem hinteren Ende des Drehtisches (3) vorgesehen ist, so dass er nach oben und nach unten in Bezug auf die Basis (2) bewegbar ist, und bei der der Arm (4) mit einem Staubsammelstutzen (28) vorgesehen ist, der an einem hinteren Ende des ersten Staubsammelweges (27) angeordnet ist.

## Revendications

1. Scie à onglets (1) comprenant
une base (2) sur laquelle une pièce à travailler peut être placée,
une table tournante (3) ayant une configuration circulaire en vue de dessus et supportée horizontalement en rotation au niveau d'une partie centrale de la base (2),
un corps principal (7) disposé au-dessus de la base (2) est configuré pour être mobile vers le haut et vers le bas par rapport à la base (2),
une lame de scie circulaire (8) ménagée sur le corps principal (7) et configurée pour être entraînée en rotation,
une fente (26) formée dans une surface supérieure de la table tournante (3) de manière à permettre à la lame de scie circulaire (8) d'entrer dans la fente (26) lorsque le corps principal (7) est baissé, une ouverture (30) étant formée au niveau d'une extrémité avant de la fente (26) sur la table tournante (3),
un premier chemin de collecte de poussière (27) qui est formé dans une direction avant-arrière juste en dessous de la fente (26) et au sein de la table tournante (3) et se termine au niveau d'une surface arrière supérieure de la table tournante (3) et est configuré pour que la lame de scie circulaire (8) soit autorisée à entrer dans le premier chemin de collecte de poussière (27) lorsque le corps principal (7) est baissé et est configuré pour que des copeaux puissent traverser le premier chemin de collecte de poussière (27) et puissent être guidés vers l'arrière de la base (2) par la rotation de la lame de scie circulaire (8), **caractérisée en ce que** la scie à onglets comprend en outre
un second chemin de collecte de poussière (32) qui est formé au sein de la table tournante (3) pour qu'une portion d'extrémité avant du second chemin de collecte de poussière (32) communique avec l'ouverture (30) et une portion d'extrémité arrière du second chemin de collecte de poussière (32) s'ouvre vers l'extérieur à travers une ouverture traversante (36) formée dans la surface arrière de la table tournante (3), et est configuré pour que des copeaux entrant dans le second chemin de collecte de poussière (32) à travers l'ouverture (30) puissent être déchargés vers l'extérieur de la base (2) à travers le second chemin de collecte de poussière (32),
dans laquelle le second chemin de collecte de poussière (32) est agencé au niveau du côté du premier chemin de collecte de poussière (27) dans la direction avant-arrière, et
dans laquelle le premier chemin de collecte de poussière (27) et le second chemin de collecte de poussière (32) sont formés séparément et indépendamment avec et sans ménagement d'un chemin de raccordement (37) raccordant le premier chemin de collecte de poussière (27) et le second chemin de collecte de poussière (32) l'un à l'autre.

2. Scie à onglet selon la revendication 1, dans laquelle une table supérieure (18) est disposée au-dessus du corps principal (7) et configurée pour qu'un bord supérieur de la lame de scie circulaire (8) pénètre la table supérieure (18) à une position baissée prédéterminée du corps principal (7) dans laquelle la table supérieure (18) est maintenue dans une posture horizontale et la pièce à travailler peut coulisser le long d'une surface supérieure de la table supérieure (18) dans des directions avant-arrière, et dans laquelle la portion d'extrémité avant du second chemin de collecte de poussière (32) s'ouvre au niveau d'un côté avant du premier chemin de collecte de poussière (27) pour que le second chemin de collecte de poussière (32) soit en communication avec le corps principal (7) à la position baissée prédéterminée du corps principal (7), moyennant quoi des copeaux générés par découpe de la pièce à travailler sur la table supérieure (18) à la position baissée prédéterminée du corps principal (7) sont guidés pour traverser l'intérieur du corps principal (7) et aller dans le second chemin de collecte de poussière (32) et être déchargés à l'extérieur de la base (2).

3. Scie à onglets selon la revendication 2, dans laquelle un couvercle de sécurité (15) est ménagé sur le corps principal (7) et configuré pour être déplacé en rotation par des mouvements vers le haut et vers le bas du corps principal (7), entre une position de couverture à laquelle le couvercle de sécurité (15) est positionné au niveau d'un côté inférieur du corps principal (7) pour protéger la lame de scie circulaire (8) et une position ouverte à laquelle le couvercle de sécurité (15) est positionné au niveau d'un côté avant du corps principal (7) pour exposer un bord inférieur de la lame de scie circulaire (8), et le couvercle de sécurité (15) est positionné dans la position ouverte lorsque le corps principal (7) est dans la position baissée prédéterminée, position dans laquelle la portion d'extrémité avant du second chemin de collecte de poussière (32) est en communication avec un intérieur du couvercle de sécurité (15) tandis que la portion d'extrémité arrière du second chemin de collecte de poussière (32) s'ouvre au niveau d'une surface arrière de la table tournante (3), moyennant quoi des copeaux générés par découpe de la pièce à travailler sur la table supérieure (18) sont guidés pour traverser le couvercle de sécurité (15) et aller dans le second chemin de collecte de poussière (32) et être déchargés vers l'arrière de la table tournante (3).

4. Scie à onglets selon l'une quelconque des revendications 1 à 3, dans laquelle, le premier chemin de collecte de poussière (27) et le second chemin de collecte de poussière (32) sont raccordés l'un à l'autre par l'intermédiaire d'un chemin de raccordement (37).

5. Scie à onglets selon l'une quelconque des revendications 1 à 4, dans laquelle le chemin de raccordement (37) raccorde le premier chemin de collecte de poussière (27) et le second chemin de collecte de poussière (32) au niveau d'une demi-portion arrière du second chemin de collecte de poussière (32).

6. Scie à onglets selon l'une quelconque des revendications 1 à 4, dans laquelle le chemin de raccordement (37) raccorde le premier chemin de collecte de poussière (27) et le second chemin de collecte de poussière (32) au niveau de leur demi-portion inférieure.

7. Scie à onglets selon l'une quelconque des revendications 1 à 6, dans laquelle le second chemin de collecte de poussière (32) est adjacent au premier chemin de collecte de poussière (27).

8. Scie à onglets selon l'une quelconque des revendications 1 à 7, dans laquelle une ouverture traversante (40) est formée dans une surface de dessous du second chemin de collecte de poussière (32) pour qu'une partie du second chemin de collecte de poussière (32) s'ouvre vers l'extérieur.

9. Scie à onglets selon la revendication 8, dans laquelle l'ouverture traversante (40) est formée comme un trou oblong (40) s'étendant suivant une direction dans laquelle le second chemin de collecte de poussière (32) est formé.

10. Scie à onglets selon l'une quelconque des revendications 1 à 9, dans laquelle le premier chemin de collecte de poussière (27) a une profondeur qui varie en conformité avec une forme de la lame de scie circulaire (8) pour qu'une section du premier chemin de collecte de poussière (27) définisse un arc circulaire et une portion centrale de celui-ci devienne la plus profonde.

11. Scie à onglets selon l'une quelconque des revendications 1 à 10, dans laquelle le corps principal (7) est supporté sur un arbre de support (6) au niveau d'une extrémité supérieure d'un bras (4) ménagé au niveau de l'extrémité arrière de la table tournante (3) de manière à pouvoir se déplacer vers le haut et vers le bas par rapport à la base (2), et dans laquelle le bras (4) est pourvu d'une buse de collecte de poussière (28) qui est agencée au niveau d'un arrière du premier chemin de collecte de poussière (27).
